# EUROPÄISCHE PATENTSCHRIFT

(11) **EP 1 208 017 B1**
(45) Veröffentlichungstag und Bekanntmachung des Hinweises auf die Patenterteilung: **10.03.2004**
(21) Anmeldenummer: 01943161.8
(22) Anmeldetag: 26.05.2001
(51) Int. Cl.: B60K 15/077, F02M 37/10

(54) **VORRICHTUNG ZUM FÖRDERN VON KRAFTSTOFF AUS EINEM VORRATSTANK ZU EINER BRENNKRAFTMASCHINE EINES KRAFTFAHRZEUGS**
DEVICE FOR DELIVERING FUEL FROM A STORAGE TANK TO AN INTERNAL COMBUSTION ENGINE OF A MOTOR VEHICLE
DISPOSITIF POUR LE TRANSPORT DE CARBURANT DU RESERVOIR AU MOTEUR A COMBUSTION INTERNE D'UN VEHICULE AUTOMOBILE

(30) Priorität: 08.06.2000 DE 10028458
(43) Veröffentlichungstag der Anmeldung: 29.05.2002
(73) Patentinhaber: ROBERT BOSCH GMBH, 70442 Stuttgart (DE)
(72) Erfinder: GABAUER, Wolfgang, 71679 Asperg (DE); SCHRECKENBERGER, Dieter, D-71672 Marbach (DE); WHEELER, Tony, Anderson, SC 29621 (DE)
(86) Internationale Anmeldenummer: PCT/DE2001/002031
(87) Internationale Veröffentlichungsnummer: WO 2001/094143

(56) Entgegenhaltungen:
- DE-A- 3 942 312
- DE-A- 4 337 183
- DE-A- 19 625 629
- US-A- 5 680 847

## Beschreibung

### Stand der Technik

Die Erfindung geht aus von einer Vorrichtung zum Fördern von Kraftstoff aus einem Vorratstank zu einer Brennkraftmaschine eines Kraftfahrzeugs nach der Gattung des Anspruchs 1.

Eine solche Vorrichtung ist durch die DE-A- 39 42 312 bekannt. Diese Vorrichtung weist einen im Vorratstank angeordneten Staubehälter auf, in welchem ein Förderaggregat angeordnet ist, das Kraftstoff zur Brennkraftmaschine fördert. Die Vorrichtung weist eine Strahlpumpe auf, der eine Teilmenge des vom Förderaggregat geförderten Kraftstoffs zugeführt wird und das Kraftstoff aus dem Vorratstank in den Staubehälter fördert. Der Strahlpumpe wird dabei die Teilmenge des vom Förderaggregat geförderten Kraftstoffs zugeführt, die von der Brennkraftmaschine nicht verbraucht und in den Vorratstank zurückgeführt wird. Nahe einem Boden des Staubehälters ist ein Saugraum angeordnet, aus dem das Förderaggregat Kraftstoff ansaugt. Der Saugraum ist über eine Ventileinrichtung bei gefülltem Staubehälter mit diesem verbunden und vom Vorratstank getrennt, so daß das Förderaggregat Kraftstoff aus dem Staubehälter ansaugt. Bei entleertem Staubehälter ist der Saugraum durch die Ventileinrichtung mit dem Vorratstank verbunden und vom Staubehälter getrennt, so daß das Förderaggregat Kraftstoff aus dem Vorratstank ansaugt. Ein entleerter Staubehälter liegt vor, wenn der Vorratstank so weit entleert ist, daß die Strahlpumpe keinen Kraftstoff mehr aus diesem in den Staubehälter fördern kann. Wenn nun eine geringe Kraftstoffmenge, beispielsweise aus einem Reservekanister, in den Vorratstank nachgefüllt wird, so wird hierbei der Staubehälter noch nicht gefüllt, jedoch kann das Förderaggregat gesteuert durch die Ventileinrichtung Kraftstoff direkt aus dem Vorratstank ansaugen. Hierbei sollte jedoch sichergestellt sein, daß das Förderaggregat bereits bei einer möglichst geringen Füllhöhe des Kraftstoffs diesen sicher aus dem Vorratstank ansaugen kann. Bei der bekannten Vorrichtung ist die Ventileinrichtung unterhalb des Förderaggregats angeordnet, woraus eine große Bauhöhe resultiert und das Förderaggregat den Kraftstoff aus dem Vorratstank über eine große Höhe ansaugen muß, wozu eine entsprechende Förderhöhe erforderlich ist.

### Vorteile der Erfindung

Die erfindungsgemäße Vorrichtung mit den Merkmalen gemäß Anspruch 1 hat demgegenüber den Vorteil, daß am Boden des Staubehälters nur das Rückschlagventil angeordnet ist und somit das Förderaggregat nahe dem Boden des Staubehälters und somit nahe dem Boden des Vorratstanks angeordnet werden kann und daher bereits bei sehr geringer Füllhöhe des Kraftstoffs im Vorratstank durch das Förderaggregat Kraftstoff aus dem Vorratstank über eine geringe Förderhöhe angesaugt werden kann. Durch die Anordnung des Schwimmerventils seitlich zum Förderaggregat versetzt wird eine geringe Bauhöhe der Vorrichtung erreicht.

In den abhängigen Ansprüchen sind vorteilhafte Ausgestaltungen und Weiterbildungen der erfindungsgemäßen Vorrichtung angegeben. Die Merkmale gemäß Anspruch 2 ermöglichen eine weitere Verringerung des Bauhöhe der Vorrichtung. Die Merkmale gemäß Anspruch 3 ermöglichen eine einfache Ausbildung des Rückschlagventils. Die Merkmale gemäß Anspruch 5 ermöglichen einen einfachen Aufbau des Schwimmerventils.

### Zeichnung

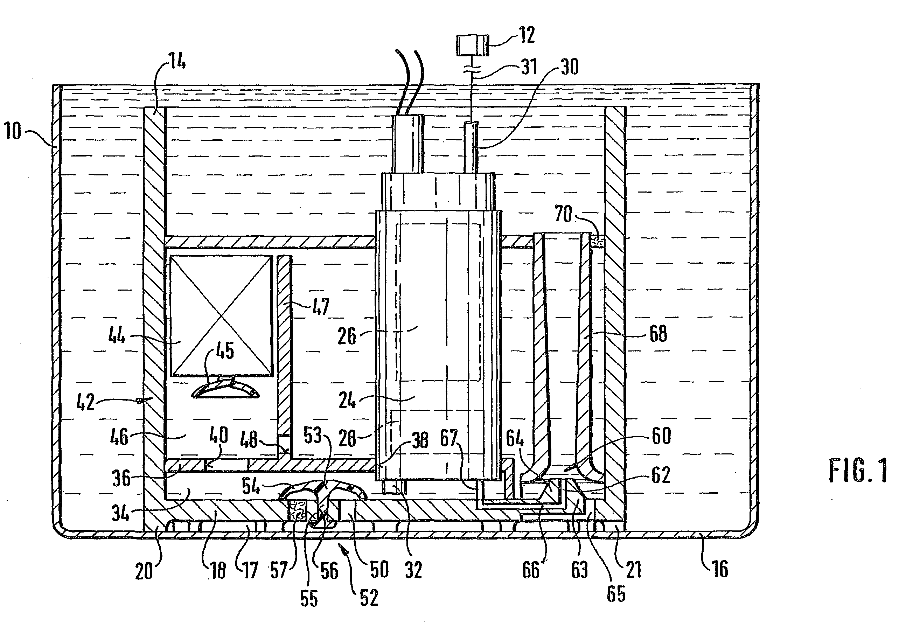

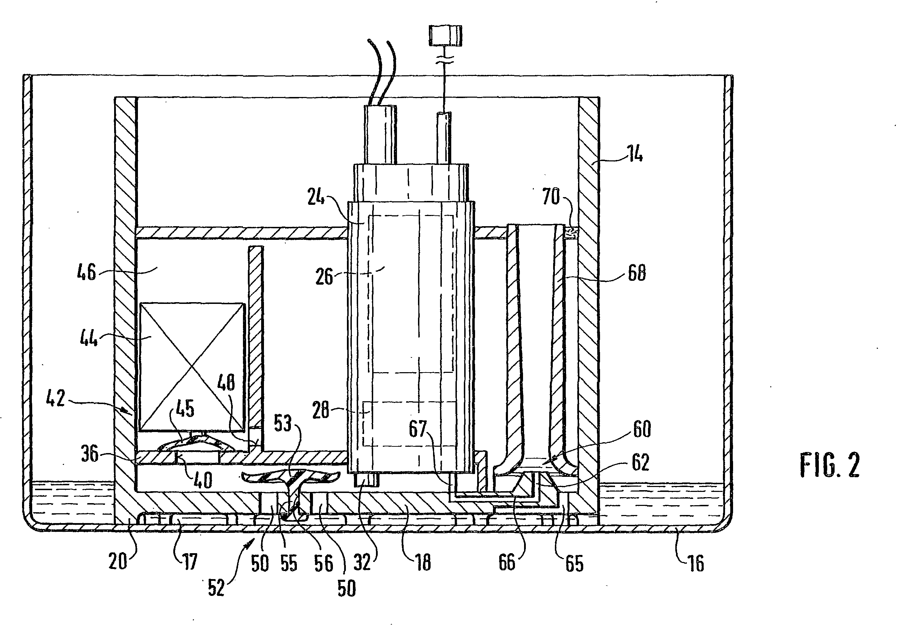

Ein Ausführungsbeispiel der Erfindung ist in der Zeichnung dargestellt und in der nachfolgenden Beschreibung näher erläutert. Es zeigen Figur 1 eine Vorrichtung zum Fördern von Kraftstoff aus einem Vorratstank zu einer Brennkraftmaschine eines Kraftfahrzeugs mit einem gefüllten Staubehälter und Figur 2 die Vorrichtung mit entleertem Staubehälter.

### Beschreibung des Ausführungsbeispiels

In den Figuren 1 und 2 ist eine Vorrichtung zum Fördern von Kraftstoff aus einem Vorratstank 10 zu einer Brennkraftmaschine 12 eines Kraftfahrzeugs dargestellt. Die Brennkraftmaschine 12 weist eine Einspritzanlage auf, durch die Kraftstoff in die Zylinder der Brennkraftmaschine eingespritzt wird. Die Vorrichtung weist einen im Vorratstank 10 angeordnetem topfförmigen Staubehälter 14 auf, der an seiner Oberseite offen ist und der gegenüber dem Vorratstank 10 ein wesentlich geringeres Volumen besitzt. Der Staubehälter 14 ist in nicht näher dargestellter Weise im Vorratstank 10 gehalten und sitzt auf dem Boden 16 des Vorratstanks 10 auf. Der Boden 18 des Staubehälters 14 ist mit geringem Abstand vom Boden 16 des Vorratstanks 10 angeordnet, so daß zwischen dem Boden 18 des Staubehälters 14 und dem Boden 16 des Vorratstanks 10 ein Raum 17 verbleibt. Zwischen dem Boden 16 des Vorratstanks 10 und dem Boden 18 des Staubehälters 14 kann ein über den Umfang des Staubehälters 14 verlaufender Ring 20 angeordnet sein, der für den erforderlichen Abstand zwischen dem Tankboden 16 und dem Boden 18 des Staubehälters 14 sorgt und der eine Vielzahl von Öffnungen 21 aufweist, durch die der Raum 17 zwischen dem Tankboden 16 und dem Boden 18 des Staubehälters 14 mit dem übrigen Vorratstank 10 verbunden ist.

Im Staubehälter 14 ist ein Förderaggregat 24 angeordnet, durch das Kraftstoff zur Brennkraftmaschine 12 gefördert wird. Das Förderaggregat 24 weist einen elektrischen Antriebsmotor 26 und einen Pumpenteil 28 auf, die in einem gemeinsamen Gehäuse angeordnet sind. Das Förderaggregat 24 ist im Staubehälter 14 derart angeordnet, daß dessen Pumpenteil 28 zum Boden 18 des Staubehälters 14 weist. Das Förderaggregat 24 weist an seinem oberen Endbereich einen Auslaßstutzen 30 auf, an dem eine Leitung 31 angeschlossen ist, durch die der vom Förderaggregat 24 geförderte Kraftstoff zur Brennkraftmaschine 12 gelangt. Das Förderaggregat 24 weist an seinem oberen Endbereich außerdem elektrische Anschlüsse für den Antriebsmotor 26 auf, an denen von einer Spannungsquelle herführende Leitungen angeschlossen sind. An seinem unteren Endbereich weist das Förderaggregat 24 einen Ansaugstutzen 32 auf, durch den der Pumpenteil 28 beim Betrieb des Förderaggregats 24 Kraftstoff ansaugt.

Das Förderaggregat 24 ragt mit seinem unteren Endbereich mit dem Ansaugstutzen 32 in einen im Staubehälter 14 abgetrennten Saugraum 34 hinein. Der Saugraum 34 ist durch ein in den Staubehälter 14 eingesetztes Einsatzteil 36 vom übrigen Staubehälter 14 getrennt, das mit Abstand vom Boden 18 des Staubehälters 14 angeordnet ist und eine Öffnung 38 aufweist, durch die der untere Endbereich des Förderaggregats 24 vom Staubehälter 14 in den Saugraum 34 hindurchragt. Das Einsatzteil 36 weist seitlich zur Öffnung 38 versetzt eine weitere Öffnung 40 auf, die eine Verbindung des Saugraums 34 mit dem übrigen Staubehälter 14 bildet. Die Öffnung 40 wird durch ein Schwimmerventil 42 gesteuert, das einen oberhalb des Einsatzteils 36 angeordneten Schwimmerkörper 44 aufweist, der an seinem unteren Endbereich ein Ventilglied 45 trägt, durch das die Öffnung 40 des Einsatzteils 36 verschließbar ist. Das Ventilglied 45 ist beispielsweise kappenförmig ausgebildet, so daß dieses zum Verschließen die Öffnung 40 überdeckt und am Rand neben der Öffnung 40 auf dem Einsatzteil 36 aufliegt. Das Ventilglied 45 ist vorzugsweise elastisch verformbar ausgebildet und besteht beispielsweise aus kraftstoffbeständigem Gummi oder Kunststoff. Der Schwimmerkörper 44 ist in einer Kammer 46 in vertikaler Richtung beweglich geführt, wobei die Kammer 46 nach unten durch das Einsatzteil 36, in den Staubehälter 14 durch eine Seitenwand 47 und außerdem durch eine Seitenwand des Staubehälters 14 begrenzt ist. Die Kammer 46 kann nach oben offen sein. In der Seitenwand 47 ist nahe deren zum Einsatzteil 36 weisendem unterem Ende wenigstens eine Öffnung 48 ausgebildet, durch die die Kammer 46 mit dem Staubehälter 14 oberhalb des Einsatzteils 36 verbunden ist. Der Schwimmerkörper 44 mit dem Ventilglied 45 weist ein geringeres spezifisches Gewicht auf als der Kraftstoff, so daß dieser im Kraftstoff schwimmt. Das Schwimmerventil 42 ist seitlich zum Förderaggregat 24 versetzt angeordnet.

Im Boden 18 des Staubehälters 14 ist wenigstens eine Öffnung 50 vorhanden, durch die der Saugraum 34 mit dem zwischen dem Tankboden 16 und dem Boden 18 des Staubehälters 14 begrenzten Raum 17 verbunden ist. Die Öffnung 50 wird durch ein Rückschlagventil 52 gesteuert, das in den Saugraum 34 öffnet. Das Rückschlagventil 52 weist ein Ventilglied 53 mit einem im Saugraum 34 angeordneten kappenförmigen Bereich 54 auf, von dem ein Zapfen 55 absteht, der durch eine Bohrung 56 hindurchtritt und an seinem anderen Ende eine Verdickung aufweist, so daß das Ventilglied 53 fixiert ist. Der kappenförmige Bereich 54 ist elastisch verformbar ausgebildet und kommt zum Verschließen der Öffnung 50 am Rand neben dieser am Boden 18 des Staubehälters 14 zur Anlage. Das Ventilglied 53 besteht wie das Ventilglied 45 des Schimmerventils 42 vorzugsweise aus kraftstoffbeständigem Kunststoff oder Gummi. Die Bohrung 56 kann im Boden 18 des Staubehälters 14 ausgebildet sein, wobei die Öffnung 50 dann von mehreren Durchbrüchen gebildet ist, um einen mittleren Bereich mit der Bohrung 56 am Boden 18 zu erhalten. Alternativ kann das Rückschlagventil 52 auch eine Baueinheit bestehend aus dem Ventilglied 53 sowie einem Trägerelement mit der Bohrung 56 und der Öffnung 50 bilden, die in eine Öffnung im Boden 18 eingesetzt wird. In der Öffnung 50 kann ein Filter 57 angeordnet sein.

Neben dem Förderaggregat 24, dem Schwimmerventil 42 etwa gegenüberliegend ist eine Strahlpumpe 60 angeordnet, durch die Kraftstoff aus dem Vorratstank 10 in den Staubehälter 14 gefördert wird. Die Strahlpumpe 60 weist eine Strahldüse 62 auf, die durch einen vom Boden 18 des Staubehälters 14 nach oben abstehenden Ansatz 63 und einen Ansatz 64 des Einsatzteils 36 gebildet ist und die etwa vertikal ausgerichtet ist. Die Strahldüse 62 umgebend ist im Boden 18 des Staubehälters 14 wenigstens eine Öffnung 65 zum Raum 17 ausgebildet, durch die die Strahlpumpe 60 Kraftstoff aus dem Raum 17 ansaugen kann. Die Strahlpumpe 60 ist mit dem Förderaggregat 24 verbunden und dieser wird eine Teilmenge des vom Förderaggregat 24 geförderten Kraftstoffs zugeführt. Der Pumpenteil 28 des Förderaggregats 24 ist vorzugsweise als Strömungspumpe, insbesondere als Seitenkanalpumpe ausgebildet. Der Pumpenteil 28 weist ein umlaufend angetriebenes Laufrad auf, das mit wenigstens einem Förderkanal zusammenwirkt und durch das Kraftstoff im Förderkanal von einer mit dem Ansaugstutzen 32 verbundenen Einlaßöffnung zu einer mit dem Auslaßstutzen 30 verbundenen Auslaßöffnung gefördert wird. Die Verbindung des Pumpenteils 28 mit der Strahlpumpe 60 zweigt vorzugsweise direkt vom Förderkanal des Pumpenteils 28 in einem Bereich zwischen der Einlaßöffnung und der Auslaßöffnung ab, in dem noch nicht der volle Förderdruck vorhanden ist. Die Verbindung der Strahlpumpe 60 mit dem Pumpenteil 28 des Förderaggregats 24 verläuft entlang dem Boden 18 des Staubehälters 14 mit einem zwischen dem Boden 18 und dem Einsatzteil 36 begrenzten Kanal 66. Vom Kanal 66 führt ein Stutzen 67 ab, der in ein Deckelteil am unteren Endbereich des Förderaggregats 24 eingesteckt ist und mit dem Förderkanal des Pumpenteils 28 verbunden ist. An die Strahldüse 62 der Strahlpumpe 60 schließt sich ein etwa vertikal verlaufendes Steigrohr 68 an, durch das von der Strahlpumpe 60 geförderter Kraftstoff in den Staubehälter 14 gelangt. Etwa auf Höhe der Mündung des Steigrohrs 68 oder unterhalb von dieser ist in den Staubehälter 14 ein Filter 70 eingesetzt, durch das der von der Strahlpumpe 60 geförderte Kraftstoff in den Staubehälter gelangt.

Nachfolgend wird die Funktion der Vorrichtung erläutert. In Figur 1 ist die Vorrichtung in einem Zustand dargestellt, in dem der Staubehälter 14 mit Kraftstoff gefüllt ist. In diesem Fall ist der Schwimmerkörper 44 des Schwimmerventils 42 entsprechend dem Niveau des Kraftstoffs im Staubehälter 14 angeordnet, so daß das von diesem getragene Ventilglied 45 mit Abstand vom Einsatzteil 36 angeordnet ist und die Öffnung 40 freigegeben ist, so daß der Saugraum 34 über die Öffnung 40, die Kammer 46 und die Öffnung 48 mit dem Staubehälter 14 verbunden ist. Auf den kappenförmigen Bereich 54 des Ventilglieds 53 des Rückschlagventils 52 wirkt der statische Druck der Kraftstoffsäule im Staubehälter 14, so daß dieses gegen den Boden 18 des Staubehälters 14 gepresst und das Rückschlagventil 52 geschlossen gehalten wird. Während des Betriebs des Förderaggregats 24 saugt dieses über den Ansaugstutzen 32 Kraftstoff aus dem Saugraum 34 und damit aus dem Staubehälter 14 an und fördert diesen über den Auslaßstutzen 30 und die Leitung 31 zu der Brennkraftmaschine 12. Ein Teil des vom Förderaggregat 24 angesaugten Kraftstoffs wird über den Stutzen 67 und den Kanal 66 der Strahlpumpe 60 zugeführt. Bei der Strahlpumpe 60 tritt der dieser vom Förderaggregat 24 zugeführte Kraftstoff aus der Strahldüse 62 aus und reist über die Öffnung 65 zusätzlich Kraftstoff aus dem Raum 17 und damit aus dem Vorratstank 10 mit, wobei die gesamte von der Strahlpumpe 60 geförderte Kraftstoffmenge durch das Steigrohr 68 in den Staubehälter 14 gelangt. Der in den Staubehälter 14 geförderte Kraftstoff durchströmt das Filter 70 bevor er in den Saugraum 34 gelangt, so daß das Förderaggregat 24 im Saugraum 34 nur gereinigten Kraftstoff ansaugt.

In Figur 2 ist die Vorrichtung in einem Zustand dargestellt, in dem der Staubehälter 14 leer ist und im Vorratstank 10 nur eine geringe Kraftstoffmenge mit einer entsprechend geringen Füllhöhe vorhanden ist. In diesem Zustand befindet sich die Vorrichtung, wenn der Vorratstank 10 weitgehend entleert wurde und der Staubehälter 14 durch das Förderaggregat 24 ebenfalls leergesaugt wurde und nachfolgend eine geringe Kraftstoffmenge, beispielsweise aus einem Reservekanister in den Vorratstank 10 gefüllt wurde. Der Schwimmerkörper 44 des Schwimmerventils 42 erfährt wegen des leeren Staubehälters 14 keinen Auftrieb, so daß das Ventilglied 45 auf dem Einsatzteil 36 aufliegt und die Öffnung 40 verschließt. Wenn das Förderaggregat 24 betrieben wird, so wird durch dieses im Saugraum 34 ein Unterdruck erzeugt, durch den der kappenförmige Bereich 54 des Ventilglieds 53 des Rückschlagventils 52 vom Boden 18 des Staubehälters 14 abgehoben wird, so daß die Öffnung 50 freigegeben wird und Kraftstoff aus dem Raum 17 und damit dem Vorratstank 10 vom Förderaggregat 24 angesaugt wird. Durch das Förderaggregat 24 wird somit Kraftstoff aus dem Vorratstank 10 angesaugt und zur Brennkraftmaschine 12 gefördert. Parallel wird auch der Strahlpumpe 60 Kraftstoff zugeführt, so daß durch diese Kraftstoff in den Staubehälter 14 gefördert wird. Das Rückschlagventil 52 bleibt solange geöffnet, bis der Füllstand im Staubehälter 14 ausreichend groß ist, um das Schwimmerventil 42 zu öffnen, indem dessen Schwimmerkörper 44 angehoben wird und das Ventilglied 45 die Öffnung 40 freigibt. Danach wird das Rückschlagventil 52 durch den Druck der Kraftstoffsäule im Staubehälter 14 geschlossen und das Förderaggregat 24 saugt Kraftstoff aus dem Staubehälter 14 an, der weiterhin durch die Strahlpumpe 60 befüllt wird.

Der Boden 18 des Staubehälters 14 mit dem Rückschlagventil 52 ist möglichst dicht am Boden 16 des Vorratstanks 10 angeordnet, um auch bei geringer Füllhöhe im Vorratstank 10 ein Ansaugen von Kraftstoff durch das Rückschlagventil 52 in den Saugraum 34 zu ermöglichen. Die Anordnung des Bodens 18 des Staubehälters 14 und des Rückschlagventils 52 ist vorzugsweise derart, daß bereits eine Füllhöhe im Vorratstank von etwa 8 mm ausreicht, um Kraftstoff in den Saugraum 34 ansaugen zu können.

## Patentansprüche

1. Vorrichtung zum Fördern von Kraftstoff aus einem Vorratstank zu einer Brennkraftmaschine eines Kraftfahrzeugs, mit einem im Vorratstank (10) angeordneten Staubehälter (14), in welchem ein Förderaggregat (24) angeordnet ist, das Kraftstoff zur Brennkraftmaschine (12) fördert, mit einer Strahlpumpe (60), der eine Teilmenge des vom Förderaggregat (24) geförderten Kraftstoffs zugeführt wird und die Kraftstoff aus dem Vorratstank (10) in den Staubehälter (14) fördert, mit einem unterhalb des Förderaggregats (24) nahe einem Boden (18) des Staubehälters (14) angeordneten Saugraum (34), aus dem das Förderaggregat (24) Kraftstoff ansaugt, und mit einer Ventileinrichtung (42,60), über die der Saugraum (34) bei gefülltem Staubehälter (14) mit diesem verbunden und vom Vorratstank (10) getrennt ist, so daß das Förderaggregat (24) Kraftstoff aus dem Staubehälter (14) ansaugt, und über die bei entleertem Staubehälter (14) der Saugraum (34) mit dem Vorratstank (10) verbunden und vom Staubehälter (14) getrennt ist, so daß das Förderaggregat (24) Kraftstoff aus dem Vorratstank (10) ansaugt, wobei die Ventileinrichtung ein die Verbindung des Saugraums (34) mit dem Vorratstank (10) steuerndes, am Boden (18) des Staubehälters (14) angeordnetes Rückschlagventil (52) aufweist, **dadurch gekennzeichnet, daß** die Ventileinrichtung ein die Verbindung des Saugraums (34) mit dem Staubehälter (14) steuerndes, seitlich neben dem Förderaggregat (24) angeordnetes Schwimmerventil (42) aufweist.

2. Vorrichtung nach Anspruch 1, **dadurch gekennzeichnet, daß** das Rückschlagventil (52) seitlich zum Förderaggregat (24) versetzt angeordnet ist.

3. Vorrichtung nach Anspruch 1 oder 2, **dadurch gekennzeichnet, daß** das Rückschlagventil (52) ein Ventilglied (53) mit einem im Saugraum (34) angeordneten kappenförmigen Bereich (54) aufweist, durch den eine in den Vorratstank (10) führende Öffnung (50) im Boden (18) des Staubehälters (14) verschließbar ist.

4. Vorrichtung nach Anspruch 3, **dadurch gekennzeichnet, daß** der kappenförmige Bereich (54) des Ventilglieds (53) elastisch verformbar ist.

5. Vorrichtung nach einem der vorstehenden Ansprüche, **dadurch gekennzeichnet, daß** das Schwimmerventil (42) einen Schwimmerkörper (44) aufweist, der in einer mit dem Staubehälter (14) verbundenen Kammer (46) verschiebbar geführt ist und der ein Ventilglied (45) trägt, durch das eine Öffnung (40) vom Saugraum (34) in den Staubehälter (14) verschließbar ist.

6. Vorrichtung nach Anspruch 5, **dadurch gekennzeichnet, daß** die Strahlpumpe (60) eine zumindest annähernd entlang dem Boden (18) des Staubehälters (14) verlaufende Verbindung (66) mit dem Förderaggregat (24) aufweist.

7. Vorrichtung nach einem der vorstehenden Ansprüche, **dadurch gekennzeichnet, daß** im Staubehälter (14) ein Filter (70) angeordnet ist, durch das von der Strahlpumpe (60) geförderter Kraftstoff in den Saugraum (34) gelangt.

8. Vorrichtung nach einem der vorstehenden Ansprüche, **dadurch gekennzeichnet, daß** in der Verbindung des Saugraums (34) mit dem Vorratstank (10) ein Filter (57) angeordnet ist.

## Claims

1. Device for the conveyance of fuel out of a storage tank to an internal combustion engine of a motor vehicle, with a catchment vessel (14) which is arranged in the storage tank (10) and in which is arranged a conveying assembly (24) conveying fuel to the internal combustion engine (12), with a jet pump (60) to which a part-quantity of the fuel conveyed by the conveying assembly (24) is supplied and which conveys fuel out of the storage tank (10) into the catchment vessel (14), with a suction space (34) which is arranged below the conveying assembly (24), near a bottom (18) of the catchment vessel (14), and out of which the conveying assembly (24) sucks fuel, and with a valve means (42, 60), via which, with the catchment vessel (14) filled, the suction space (34) is connected to the latter and is separated from the storage tank (10), so that the conveying assembly (24) sucks fuel out of the catchment vessel (14), and via which, with the catchment vessel (14) emptied, the suction space (34) is connected to the storage tank (10) and is separated from the catchment vessel (14), so that the conveying assembly (24) sucks fuel out of the storage tank (10), the valve means having a non-return valve (52) controlling the connection of the suction space (34) to the storage tank (10) and arranged at the bottom (18) of the catchment vessel (14), **characterized in that** the valve means has a float valve (42) controlling the connection of the suction space (34) to the catchment vessel (14) and arranged laterally next to the conveying assembly (24).

2. Device according to Claim 1, **characterized in that** the non-return valve (52) is arranged to be offset laterally to the conveying assembly (24).

3. Device according to Claim 1 or 2, **characterized in that** the non-return valve (52) has a valve member (53) with a cap-shaped region (54) which is arranged in the suction space (34) and by means of which an orifice (50), leading into the storage tank (10), in the bottom (18) of the catchment vessel (14) can be closed.

4. Device according to Claim 3, **characterized in that** the cap-shaped region (54) of the valve member (53) is elastically deformable.

5. Device according to one of the preceding claims, **characterized in that** the float valve (42) has a float body (44) which is guided displaceably in a chamber (46) connected to the catchment vessel (14) and which carries a valve member (45) by means of which an orifice (40) from the suction space (34) into the catchment vessel (14) can be closed.

6. Device according to Claim 5, **characterized in that** the jet pump (60) has a connection (66) to the conveying assembly (24), the said connection running at least approximately along the bottom (18) of the catchment vessel (14).

7. Device according to one of the preceding claims, **characterized in that** a filter (70), through which fuel conveyed by the jet pump (60) passes into the suction space (34), is arranged in the catchment vessel (14).

8. Device according to one of the preceding claims, **characterized in that** a filter (57) is arranged in the connection of the suction space (34) to the storage tank (10).

## Revendications

1. Dispositif pour alimenter en carburant à partir d'un réservoir de stockage ou un moteur à combustion interne d'un véhicule, comportant
- un réservoir de retenue (14) placé dans le réservoir de stockage (10),
dans lequel est installée une unité d'alimentation (24) pour l'acheminement du carburant jusqu'au moteur à combustion interne (12),
- une pompe d'injection (60) dans laquelle est amenée une quantité partielle du carburant acheminée par l'unité d'alimentation (24) qui achemine du carburant du réservoir de stockage (10) au réservoir de retenue (14),
- un compartiment d'aspiration (34) situé en dessous de l'unité d'alimentation (24) à proximité du fond (18) du réservoir de retenue (14),
dans lequel l'unité d'alimentation (24) aspire le carburant, ainsi qu'
- un système de soupape (42, 60) par l'intermédiaire duquel le compartiment d'aspiration (34), lorsque le réservoir de retenue (14) est plein, communique avec celui-ci tout en étant isolé du réservoir de stockage, si bien que l'unité d'alimentation (24) aspire du carburant dans le réservoir de retenue (14), et par l'intermédiaire duquel, lorsque le réservoir de retenue (14) est vide, le compartiment d'aspiration (34) communique avec le réservoir de stockage tout en étant isolé du réservoir de retenue (14), si bien que l'unité d'alimentation (24) aspire du carburant dans le réservoir de stockage (10), sachant que
- le système de soupape présente un clapet anti-retour (52) situé au fond (18) du réservoir de retenue (14), qui pilote la liaison allant du compartiment d'aspiration (34) au réservoir de stockage (10),
**caractérisé en ce que**
le système de soupapes présente une soupape à flotteur (42) qui pilote la liaison allant du compartiment d'aspiration (34) au réservoir de retenue (14), et située sur le côté de l'unité d'alimentation (24).

2. Dispositif selon la revendication 1,
**caractérisé en ce que**
le clapet anti-retour (52) est déporté sur le côté de l'unité d'alimentation (24).

3. Dispositif selon la revendication 1 ou 2,
**caractérisé en ce que**
le clapet anti-retour (52) présente un élément de soupape (53) avec une partie (54) en forme de capuchon, disposé dans le compartiment d'aspiration (34), permettant l'obturation d'une ouverture (50) débouchant dans le réservoir de stockage (10), au fond (18) du réservoir de retenue (14).

4. Dispositif selon la revendication 3,
**caractérisé en ce que**
la partie (54) en forme de capuchon de l'élément de soupape (53) peut subir une déformation élastique.

5. Dispositif selon l'une quelconque des précédentes revendications,
**caractérisé en ce que**
la soupape (42) présente un flotteur (44) guidé coulissant dans un compartiment (46) en liaison avec le réservoir de retenue (14), lequel flotteur supporte un élément de soupape (45) permettant l'obturation d'une ouverture (40) par laquelle le compartiment d'aspiration (34) communique avec le réservoir de retenue (14).

6. Dispositif selon la revendication 5,
**caractérisé en ce que**
la pompe d'injection (60) présente un élément de liaison (66) avec l'unité d'alimentation (24), lequel longe approximativement au moins le fond (18) du réservoir de retenue (14).

7. Dispositif selon l'une quelconque des précédentes revendications,
**caractérisé en ce qu'**
un filtre (70) est prévu dans le réservoir de retenue (14), que traverse le carburant acheminé par la pompe d'injection (60) pour parvenir dans le compartiment d'aspiration (34).

8. Dispositif selon l'une quelconque des précédentes revendications,
**caractérisé en ce qu'**
un filtre (57) est installé dans l'élément de liaison allant du compartiment d'aspiration (34) au réservoir de stockage (10).
